# EUROPEAN PATENT APPLICATION

(11) **EP 4 822 204 A1**
(43) Date of publication of application: **14.10.2026**
(21) Application number: 25305507.3
(22) Date of filing: 07.04.2025
(51) Int. Cl.: F16D 65/092, B61H 5/00, F16D 69/04

(54) **BRAKE PAD ASSEMBLY**

(71) Applicant: ALSTOM Holdings, 93400 Saint-Ouen-sur-Seine (FR)
(72) Inventor: HENRION, Michele, 75017 PARIS (FR); GUILLARD, Francois, 95100 ARGENTEUIL (FR); FUNCK, Guillaume, 75015 PARIS (FR); MANN, Ruddy, 71460 SAINT MARTIN DU TARTRE (FR)
(74) Representative: Plasseraud IP

(57) **Abstract**

The invention relates to a brake pad assembly (12) comprising a main plate (20) and pad modules (22). Each pad module comprises a friction element (56) and a connection device (58).

The connection device (58) comprises : a backing plate (68), fixed to the corresponding friction element ; a connecting element (71), inserted in an orifice (34) of the main plate (20) and in a connection opening (80) of the backing plate (68) ; and a spring washer (74), interposed between the backing plate (68) and the main plate.

The connecting element (71) has a non-circular external section ; and the connection opening (80) of the backing plate (68) has a substantially complementary contour ; and the connection device also comprises a removable connecting organ (75).

## Description

The present invention relates to a brake pad assembly, especially for disk brakes, comprising : a main plate, comprising opposed first and second surfaces ; and a plurality of pad modules. Each pad module comprises : a friction element ; and a connection device, connecting the friction element to the main plate. The main plate comprises a plurality of orifices, connecting the first and second surfaces. The friction element of each pad module comprises : an inner face, facing the first surface of the main plate ; and a connecting hole, extending from the inner face along a connection axis. The connection device of each pad module comprises : a backing plate, fixed to the inner face of the corresponding friction element, said backing plate comprising a first connection opening, crossed by the connection axis; a connecting element, extending along the connection axis between a first and a second connecting ends, the connecting element being inserted in one of the plurality of orifices of the main plate and in the first connection opening of the backing plate; and a spring washer, extending along the connection axis and interposed between the backing plate and the first surface of the main plate ; the spring washer comprising an internal edge and an external edge.

Such a brake pad assembly is disclosed in document US2019/0232982.

This document discloses an assembly wherein the friction elements are riveted to the main plate. Therefore, when the friction elements are worn and need replacement, it is difficult to disassemble them from the main plate.

The invention aims to provide a recyclable brake pad assembly, wherein the friction elements can be easily replaced.

For this purpose, the invention relates to a brake pad assembly of the aforementioned type, wherein the connection device of each pad module is configured so that : the connecting element has a non-circular external section ; the first connection opening of the backing plate has a contour substantially complementary to said non-circular external section of the connecting element ; and the connection device of each pad module also comprises a removable connecting organ, reversibly fixing the second connecting end to the second surface of the main plate.

According to preferred embodiments, the brake pad assembly may include one or more of the following features, considered alone or in any technically possible combination:
- the connecting element comprises : a pin, extending along the connection axis between a first pin end and a second pin end, corresponding to the second connecting end; the pin being inserted in one of the plurality of orifices of the main plate ; and a bush, extending along the connection axis; the pin being inserted in the bush so that the second pin end axially extends out of said bush ; the bush being inserted in the first connection opening of the backing plate ; the bush having a main body forming the non-circular external section of the connecting element ;

- the first surface of the main plate comprises a plurality of first annular recesses, each first annular recess being centered on one of the orifices of the main plate and being defined by a first receding edge ; and the external edge of each spring washer and the first receding edge of a corresponding first annular recesses are distant to each other;
- the first surface of the main plate comprises a plurality of second annular recesses, each second annular recess being centered on one of the orifices of the main plate and being defined by a second receding edge substantially complementary to the non-circular external section of the main body of the bush ; and the connection device of each pad module is configured so that an end of the main body of the bush, opposed to the flange, is inserted in one of the second annular recesses of the first surface of the main plate ;
- the removable connecting organ of each connection device is an elastic element able to be assembled to the second pin end and to the second surface of the main plate ;
- the second surface of the main plate comprises a plurality of third annular recesses, each third annular recess being centered on one of the orifices of the main plate ; and each elastic element is disposed in one of the third annular recesses ;
- the bush also comprises a flange aligned with the main body along the connection axis, the flange extending radially relative to the main body ;
- the connection device of each pad module comprises a first shim, axially interposed between the backing plate and the spring washer ; said first shim comprising a second connection opening with a contour substantially complementary to the non-circular external section of the main body of the bush ; said main body of the bush being inserted in said second connection opening ;
- the first shim comprises an inner face, oriented toward the first surface of the main plate ; said inner face comprises a central relief, disposed around the second connection opening and defined by a protruding edge ; and the internal edge of the spring washer is in contact with said protruding edge ;
- the inner face of the first shim also comprises at least one eccentric relief, radially distant from the central relief ;
- the at least one eccentric relief is radially distant from the corresponding first annular recess of the first surface of the main plate ;
- the brake pad assembly is configured so that : in a first compression state, the spring washer maintains a non-zero distance between the at least one eccentric relief and the first surface of the main plate ; and in a second compression state of the spring washer, said at least one eccentric relief and said first surface are in contact with each other, the second compression state being in an elastic range of the spring washer;
- the connection device of each pad module also comprises at least one second shim, axially interposed between the backing plate and the first shim ; said second shim comprising a third connection opening with a contour substantially complementary to the non-circular external section of the main body of the bush ; said main body of the bush being inserted in said third connection opening.

The invention also relates to disk brakes, especially for a railway vehicle, including a brake pad assembly as described above.

The invention will be easier to understand in view of the following description, provided solely as an example, and with reference to the appended drawings, wherein :
- Figure 1 is a perspective view of a brake pad assembly according to an embodiment of the invention ;
- Figure 2 is a perspective view of a brake pad part of the brake pad assembly of Figure 1 ;
- Figure 3 is a partially exploded view of the brake pad part of Figure 2 ;
- Figure 4 is a cross-sectional, partial view of the brake pad part of Figures 2 and 3; and
- Figure 5 is a perspective view of elements of the brake pad part of Figures 2 to 4.

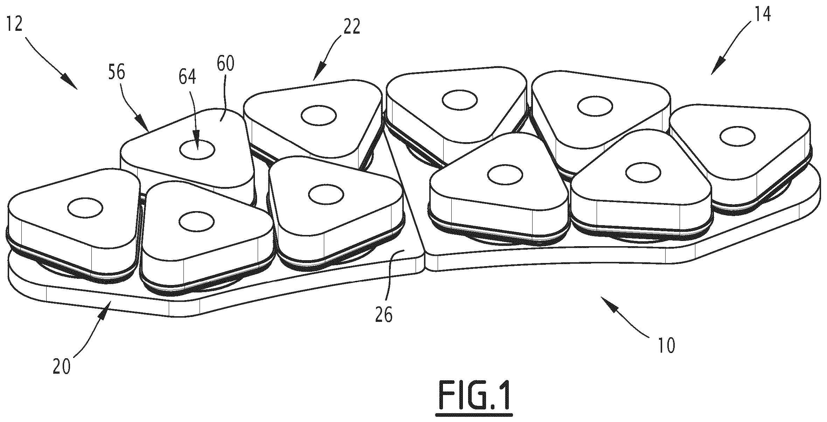

Figure 1 shows a brake pad assembly 10 according to an embodiment of the invention. The brake pad assembly 10 is designed for the equipment of a braking track, as disclosed in document US2019/0232982 mentioned above.

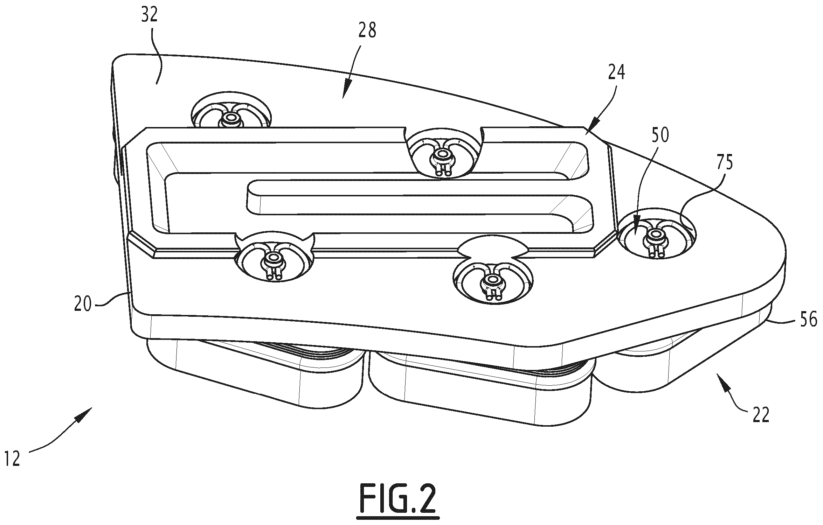

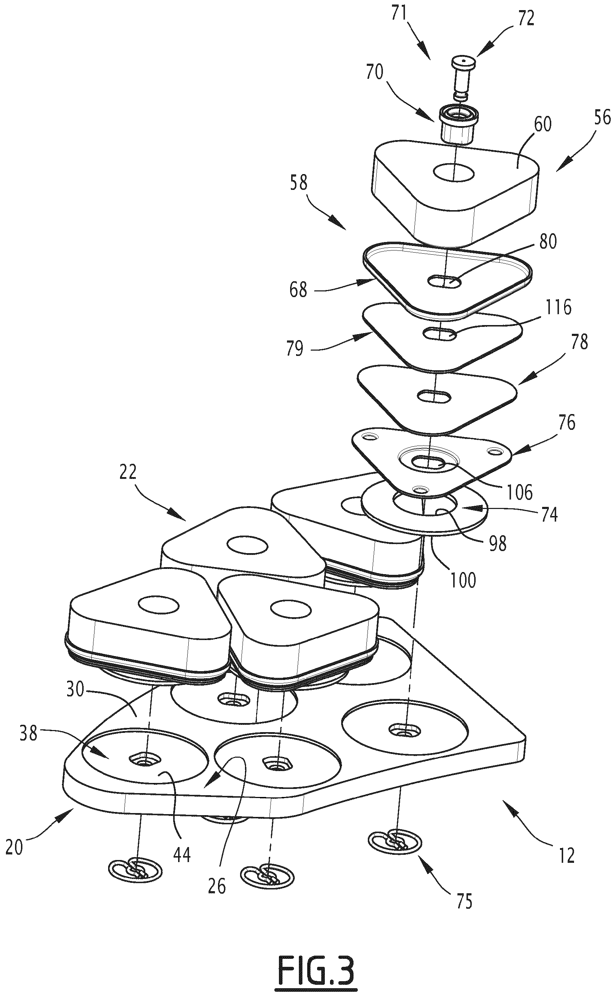

The brake pad assembly 10 comprises a left part 12 and a right part 14, substantially symmetrical to each other. The left part 12 is also visible on Figures 2-4. The left and right parts 12, 14 will be described simultaneously under the designation "the brake pad part 12, 14".

The brake pad part 12, 14 comprises : a main plate 20 ; a plurality of pad modules 22 ; and a guide 24.

The main plate 20 comprises opposed first 26 and second 28 surfaces. Said first 26 and second 28 surfaces comprise a first main surface 30 and a second main surface 32 respectively, each of the first and second main surfaces 30, 32 being substantially plane.

The main plate 20 also comprises a plurality of orifices 34, connecting the first and second surfaces 26, 28. Preferably, each orifice 34 extends along an orifice axis 36, substantially perpendicular to the first 30 and second 32 main surfaces. Preferably, each orifice 34 has a circular section, centered on the corresponding orifice axis 36.

In the shown embodiment, the first surface 26 of the main plate 20 comprises a plurality of first annular recesses 38, each first annular recess being centered on one of the orifices 34 of the main plate 20. Each first annular recess 38 is defined by a first bottom 40, substantially parallel to the first main surface 30, and by a first receding edge 42 connecting the corresponding first bottom 40 to the first main surface 30. Preferably, the first receding edge 42 has a circular shape.

In the shown embodiment, the first surface 26 of the main plate 20 also comprises a plurality of second annular recesses 44, each second annular recess being centered on one of the orifices 34 of the main plate 20. Each second annular recess 44 is defined by a second bottom 46, substantially parallel to the first main surface 30, and by a second receding edge 48, connecting the corresponding second bottom 46 to the first bottom 40 of a corresponding first annular recess 38.

Preferably, the second receding edge 48 has a non-circular shape, which will be more specifically described.

In the shown embodiment, the second surface 28 of the main plate 20 comprises a plurality of third annular recesses 50, each third annular recess being centered on one of the orifices 34 of the main plate. Each third annular recess 50 is defined by a third bottom 52, substantially parallel to the second main surface 32, and by a third receding edge 54 connecting the corresponding third bottom 52 to the second main surface 32. In the embodiment, the third receding edge 54 has a circular shape.

As detailed below, each pad module 22 is assembled to the main plate 20. More precisely, each pad module 22 is assembled to one of the orifices 34 of the main plate 20.

In the shown embodiment, the pad modules 22 are substantially identical to each other. One of the pad modules 22 will be described below.

The pad module 22 comprises a friction element 56 and a connection device 58.

The friction element 56 comprises an outer face 60 and an inner face 62, substantially parallel to each other. The inner face 62 of the friction element 56 faces the first surface 26 of the main plate 20.

The friction element 56 also comprises a connecting hole 64, extending along a connection axis 66 of the pad module 22. The connection axis 66 is perpendicular to the outer 60 and inner 62 faces of the friction element 56. In the shown embodiment, the connecting hole 64 has a circular section.

The connection device 58 comprises : a backing plate 68 ; a connecting element 71; a spring washer 74 ; and a removable connecting organ 75. In the shown embodiment, the connection device 58 also comprises a first shim 76 and at least two second shims 78, 79.

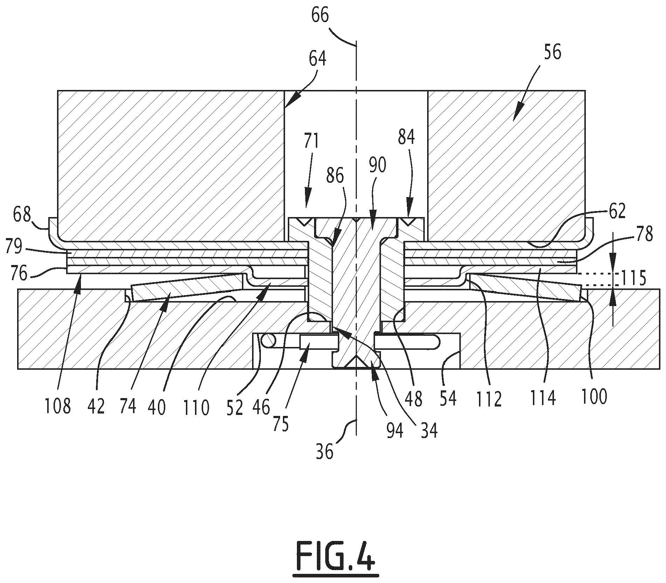

In an assembled configuration of the connection device 58, the friction element 56 is reversibly coupled to the corresponding orifice 34 of the main plate 20, as visible on Figure 4.

The backing plate 68 is fixed to the inner face 62 of the friction element 56 and comprises a first connection opening 80, crossed by the connection axis 66. Preferably, the first connection opening 80 has a contour of non-circular shape, which will be more specifically described.

The connecting element 71 extends along the connection axis 66 between a first and a second connecting ends, which will be more specifically described below. The connecting element 71 is inserted in one of the plurality of orifices 34 of the main plate 20 and in the first connection opening 80 of the backing plate 68.

In the shown embodiment, the connecting element 71 comprises a bush 70 and a pin 72, reversibly assembled to each other in the assembled configuration of the connection device 58.

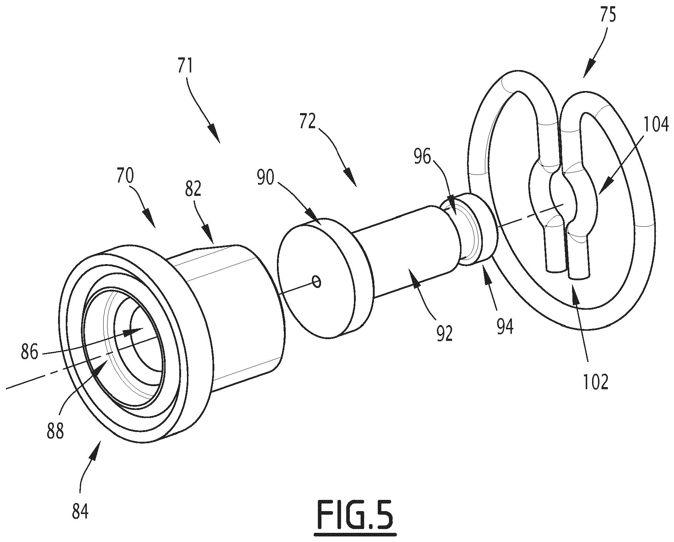

The bush 70, also shown on Figure 5, comprises a main body 82 and a flange 84, aligned along the connection axis 66.

The main body 82 has a cylindrical shape with a non-circular external section. In the shown embodiment, the non-circular external section has an oblong shape. In other embodiments (not shown), the non-circular external section of the main body 82 has a polygonal shape.

The main body 82 comprises an axial hole 86, extending along the connection axis 66. In the shown embodiment, the axial hole 86 has a cylindrical section.

The flange 84 extends radially relative to the main body 82, forming an abutment. In the shown embodiment, the flange 84 has a cylindrical shape with a circular external section, substantially complementary to the connecting hole 64 of the friction element 56.

The flange 84 comprises a cavity 88, on which the axial hole 86 opens. The cavity 88 extends radially relative to the axial hole 86.

In the assembled configuration of the connection device 58, the main body 82 of the bush 70 is inserted in the first connection opening 80 of the backing plate 68, the flange 84 axially abutting against said backing plate 68. More precisely, the non-circular shape of the first connection opening 80 is substantially complementary to the non-circular external section of the main body 82.

Moreover, in the assembled configuration, an end of the main body 82, opposed to the flange 84, is inserted in the second annular recess 44 corresponding to the orifice 34 of the main plate 20 assembled to the pad module 22. Said end of the main body 82 is in contact with the second bottom 46 of said second annular recess 44. More precisely, the non-circular shape of the second receding edge 48 is substantially complementary to the non-circular external section of the main body 82.

The axial hole 86 of the main body 82 of the bush 70 thus opens on the orifice 34 assembled to the pad module 22.

The pin 72, also shown on Figure 5, extends along the connection axis 66 and comprises an enlarged head 90, a smooth shank 92 and a connecting end 94, aligned along said connection axis. The connecting end 94 comprises an annular groove 96.

In the assembled configuration of the connection device 58, the pin 72 is inserted in the bush 70 so that the enlarged head 90 is received in the cavity 88 of the flange 84 and the smooth shank 92 is received in the axial hole 86 of the main body 82, so that the connecting end 94 and the annular groove 96 emerge from the end of the main body 82, opposed to the flange 84. The enlarged head 90 and the connecting end 94 of the pin 72 form respectively the first and the second connecting ends of the connecting element 71.

Moreover, in the assembled configuration of the connection device 58, the smooth shank 92 is inserted in the orifice 34 of the main plate 20, so that the orifice axis 36 of said orifice 34 and the connection axis 66 of the pad module 22 are merged. The connecting end 94 and the annular groove 96 emerge in the corresponding third annular recess 50.

In an alternate embodiment (not shown), the connecting element 71 is made in one piece, corresponding to the bush 70 and pin 72 fixedly assembled to each other.

The spring washer 74 extends along the connection axis 66 and has a substantially frustoconical shape. More precisely, the spring washer 74 comprises an internal edge 98 and an external edge 100, forming axial ends of said spring washer 74.

In the assembled configuration, the spring washer 74 is interposed between the backing plate 68 and the first surface 26 of the main plate 20. In the shown embodiment, the external edge 100 of the spring washer 74 is received in the first annular recess 38 corresponding to the orifice 34 assembled to the pad module 22.

Preferably, the external edge 100 and the first receding edge 42 of said first annular recess 38 are distant to each other. In other terms, the external edge 100 has a smaller diameter than the first receding edge 42 of the first annular recess 38. A deformation of the spring washer 74 is therefore eased, as described below.

The removable connecting organ 75 is configured for reversibly fixing the connecting end 94 of the pin 72 to the second surface 28 of the main plate 20. Preferably, the removable connecting organ is an elastic element such as an elastic clip 75, able to be reversibly assembled to the connecting end 94 and to the second surface 28 of the main plate.

In the shown embodiment, the elastic clip 75, also shown on Figure 5, is made of a curved metallic wire with two deformable ends 102 substantially parallel to each other. The two deformable ends 102 form a clipping region 104, able to elastically fit around the annular groove 96 of the connecting end 94 of the pin.

In the assembled configuration of the connection device 58, the clipping region 104 of the elastic clip 75 is fitted around said annular groove 96 of the connecting end 94 of the pin 72 ; and the elastic clip 75 is in contact with the third bottom 52 of the third annular recess 50 corresponding to the orifice 34 assembled to the pad module 22. The pin 72 is therefore maintained in said orifice 34.

The first shim 76 comprises a second connection opening 106 with a contour substantially complementary to the non-circular external section of the main body 82 of the bush 70. Preferably, the contours of the first 80 and second 106 connection openings are of substantially identical shapes.

The first shim 76 comprises an inner face 108, said inner face comprising a central relief 110, disposed around the second connection opening 106. The central relief 110 is defined by a protruding edge 112, preferably circular.

Preferably, the inner face 108 of the first shim 76 also comprises at least one eccentric relief 114, radially distant from the central relief 110. In the assembled configuration, the eccentric relief 114 is radially distant from the first annular recess 38 and faces the first main surface 30 of the main plate 20.

More preferably, the inner face 108 of the first shim 76 comprises at least two eccentric reliefs 114, each eccentric relief being radially distant from the first annular recess 38 and facing the first main surface 30 of the main plate 20. In the shown embodiment, the inner face 108 of the first shim 76 comprises three eccentric reliefs 114.

In the assembled configuration, the first shim 76 is axially interposed between the backing plate 68 and the spring washer 74. The main body 82 of the bush 70 is inserted in the second connection opening 106.

In the assembled configuration, the internal edge 98 of the spring washer 74 is disposed around the protruding edge 112 of the central relief 110. Preferably, said internal edge 98 is in contact with said protruding edge 112.

Preferably, in the assembled configuration, the spring washer 74 is maintained in an at least partially compressed state between the first shim 76 and the main plate 20. In a first compressed state of the spring washer 74, a non-zero distance 115 is maintained between each eccentric relief 114 and the first main surface 30 of the main plate 20.

Each of the second shims 78, 79 comprises a third connection opening 116 with a contour substantially complementary to the non-circular external section of the main body 82 of the bush 70. Preferably, the contours of the first 80, second 106 and third 116 connection openings are of substantially identical shapes.

Preferably, contrary to the first shim 76, the second shims 78, 79 have substantially flat faces without any relief.

In the assembled configuration, the second shims 78, 79 are axially interposed between the backing plate 68 and the first shim 76. The main body 82 of the bush 70 is inserted in the third connection opening 116.

In the shown embodiment, the two second shims 78 and 79 are substantially identical. In other embodiments, the connection device 58 comprises more than two second shims 78, 79, substantially identical and stacked between the backing plate 68 and the first shim 76.

The guide 24 of the brake pad part 12, 14 is preferably a dovetail guide, as disclosed in document US2019/0232982 mentioned above. In the shown embodiment, the guide 24 is formed in one piece with the second face 28 of the main plate 20.

A method of operating the brake pad part 12, 14 of the brake pad assembly 10 will now be described. The working of the disk brakes subjects the spring washer 74 to axial compression forces. In a second compressed state of the spring washer 74, more compressed than the first compressed state, the eccentric reliefs 114 of the first shim 76 come into contact with the first main surface 30 of the main plate 20. The non-zero distance 115 of the first compressed state is selected so that, in the second compressed state, the deformation of the spring washer 74 is in the elastic range and not in the plastic range. Therefore, the spring washer 74 is mechanically protected during the operating of the brakes.

The stacking of the first 76 and second 78, 79 shims is configured for noise reduction during the operating of the brakes. The non-circular shape of the main body 82 of the bush 70 and of the first 80, second 106 and third 116 connection openings provides an anti-rotation function for the connecting device 58.

When the friction elements 56 are worn, each connecting device 58 is disassembled by removing the elastic clip 75 from the annular groove 96 of the connecting end 94 of the pin 72. Each pad module 22 may therefore be recycled by replacing the friction element 56. In particular, the spring washer 74 of the connecting device 58 may be reused due to the mechanical protection mentioned above.

## Claims

1. Brake pad assembly (10, 12, 14) comprising :
- a main plate (20), comprising opposed first (26) and second (28) surfaces ; and
- a plurality of pad modules (22), each pad module comprising : a friction element (56) ; and a connection device (58), connecting the friction element to the main plate ;
the main plate comprising a plurality of orifices (34), connecting the first and second surfaces ;
the friction element (56) of each pad module comprising : an inner face (62), facing the first surface (26) of the main plate ; and a connecting hole (64), extending from the inner face along a connection axis (66) ;
the connection device (58) of each pad module comprising :
- a backing plate (68), fixed to the inner face (62) of the corresponding friction element, said backing plate comprising a first connection opening (80), crossed by the connection axis ;
- a connecting element (71), extending along the connection axis between a first and a second (94) connecting ends, the connecting element being inserted in one of the plurality of orifices (34) of the main plate (20) and in the first connection opening (80) of the backing plate (68) ; and
- a spring washer (74), extending along the connection axis and interposed between the backing plate (68) and the first surface (26) of the main plate ; the spring washer comprising an internal edge (98) and an external edge (100) ;
the brake pad assembly being **characterized in that**
- the connection device of each pad module is configured so that : the connecting element (71) has a non-circular external section ; and the first connection opening (80) of the backing plate (68) has a contour substantially complementary to said non-circular external section of the connecting element ; and
- the connection device of each pad module also comprises a removable connecting organ (75), reversibly fixing the second connecting end (94) to the second surface (28) of the main plate.

2. Brake pad assembly according to claim 1, wherein the connecting element (71) comprises :
- a pin (72), extending along the connection axis (66) between a first pin end (90) and a second pin end, corresponding to the second connecting end (94) ; the pin being inserted in one of the plurality of orifices (34) of the main plate ; and
- a bush (70), extending along the connection axis; the pin (72) being inserted in the bush so that the second pin end axially extends out of said bush ; the bush being inserted in the first connection opening (80) of the backing plate (68) ;
the bush (70) having a main body (82) forming the non-circular external section of the connecting element (71).

3. Brake pad assembly according to claim 1 or 2, wherein :
- the first surface (26) of the main plate comprises a plurality of first annular recesses (38), each first annular recess being centered on one of the orifices (34) of the main plate and being defined by a first receding edge (42) ; and
- the external edge (100) of each spring washer (74) and the first receding edge (42) of a corresponding first annular recesses (38) are distant to each other.

4. Brake pad assembly according to one of the preceding claims, wherein : the first surface of the main plate comprises a plurality of second annular recesses (44), each second annular recess being centered on one of the orifices (34) of the main plate and being defined by a second receding edge (48) substantially complementary to the non-circular external section of the main body of the bush ; and the connection device of each pad module is configured so that an end of the main body (82) of the bush, opposed to the flange, is inserted in one of the second annular recesses (44) of the first surface of the main plate.

5. Brake pad assembly according to one of the preceding claims, wherein the removable connecting organ (75) of each connection device is an elastic element (75) able to be assembled to the second pin end (94, 96) and to the second surface (28) of the main plate.

6. Brake pad assembly according to claim 5, wherein : the second surface (28) of the main plate comprises a plurality of third annular recesses (50), each third annular recess being centered on one of the orifices (34) of the main plate ; and each elastic element (75) is disposed in one of the third annular recesses.

7. Brake pad assembly according to one of claims 2 to 6, wherein the bush (70) also comprises a flange (84) aligned with the main body (82) along the connection axis (66), the flange extending radially relative to the main body.

8. Brake pad assembly according to one of claims 2 to 7, wherein the connection device of each pad module comprises a first shim (76), axially interposed between the backing plate (68) and the spring washer (74) ; said first shim comprising a second connection opening (106) with a contour substantially complementary to the non-circular external section of the main body (82) of the bush ; said main body of the bush being inserted in said second connection opening.

9. Brake pad assembly according to claim 8, wherein : the first shim (76) comprises an inner face (108), oriented toward the first surface of the main plate ; said inner face (108) comprises a central relief (110), disposed around the second connection opening (106) and defined by a protruding edge (112) ; and the internal edge of the spring washer (74) is in contact with said protruding edge (112).

10. Brake pad assembly according to claim 9, wherein the inner face (108) of the first shim (76) also comprises at least one eccentric relief (114), radially distant from the central relief (110).

11. Brake pad assembly according to claim 10 taken in combination with claim 3, wherein the at least one eccentric relief (114) is radially distant from the corresponding first annular recess (38) of the first surface (26) of the main plate (20).

12. Brake pad assembly according to claim 10 or 11, configured so that : in a first compression state, the spring washer (74) maintains a non-zero distance (115) between the at least one eccentric relief (114) and the first surface (26) of the main plate (20) ; and in a second compression state of the spring washer, said at least one eccentric relief (114) and said first surface (26) are in contact with each other, the second compression state being in an elastic range of the spring washer (74).

13. Brake pad assembly according to one of claims 8 to 12, wherein the connection device (58) of each pad module (22) also comprises at least one second shim (78, 79), axially interposed between the backing plate and the first shim ; said second shim comprising a third connection opening (116) with a contour substantially complementary to the non-circular external section of the main body (82) of the bush ; said main body of the bush being inserted in said third connection opening.

14. Disk brakes, especially for a railway vehicle, including a brake pad assembly (10) according to one of the previous claims.
